# EUROPÄISCHE PATENTANMELDUNG

(11) **EP 1 100 244 A2**
(43) Veröffentlichungstag der Anmeldung: **16.05.2001**
(21) Anmeldenummer: 00123781.7
(22) Anmeldetag: 02.11.2000
(51) Int. Cl.: H04M 3/42

(54) **Verfahren und Computerprodukt zum dynamischen Weiterleiten von Nachrichten**

(30) Priorität: 10.11.1999 DE 19954016
(71) Anmelder: ALCATEL, 75008 Paris (FR)
(72) Erfinder: Wilhelm, Michael, 71665 Vaihingen/Enz (DE); Herzog, Günther, 70439 Stuttgart (DE); Reemtsma, Jan-Hinnerk, 70825 Korntal-Münchingen (DE)
(74) Vertreter: KOHLER SCHMID + PARTNER

(57) **Zusammenfassung**

Bei einem Verfahren zum Weiterleiten von Nachrichten (5), die an den Anschluß eines Teilnehmers in einem Telekommunikationssystem gerichtet sind, an einen anderen Zielanschluß (3, 4) wird das Eingehen bzw. Anstehen von an den Teilnehmeranschluß gerichteten Nachrichten (5) dem Teilnehmer an seinem Endgerät (2) bekanntgegeben, und der Teilnehmer entscheidet, ob und zu welchem anderen Zielanschluß (3, 4) diese Nachrichten (5) jeweils weitergeleitet werden sollen. Dadurch wird eine einheitliche Anschlußnummer des Teilnehmers für alle Telekommunikationsdienste möglich, obwohl auf dem unter dieser Anschlußnummer angeschlossenen Endgerät (2) unter Umständen nicht alle Dienste empfangen werden können.

## Beschreibung

Die Erfindung betrifft ein Verfahren zum Weiterleiten von Nachrichten, die an den Anschluß eines Teilnehmers in einem Telekommunikationssystem gerichtet sind, an einen anderen Zielanschluß, sowie ein Computerprodukt mit Computerprogramm-Codemitteln, die geeignet sind, alle Schritte dieses Verfahrens durchzuführen.

Häufig sind Geräte für Telekommunikationsdienste, wie z.B. Telefone und Telefax, in getrennten Geräten realisiert und unter unterschiedlichen Anschlußnummern erreichbar. So sind in vielen praktischen Anordnungen Telefone für Personen bestimmt und Telefaxe für Personengruppen, insbesondere in Nebenstellenanlagen (PABX), wobei Telefone und Telefax unterschiedliche Nebenanschlußnummern haben.

Dies ist z.B. in Nebenstellenanlagen der Fall, in denen Telefone persönlich und Telefax-Geräte Abteilungen zugeordnet sind. Daraus folgt, daß jeder Teilnehmer trotz ISDN getrennte Anschlußnummern für Telefax und Telefon haben muß. In einigen Fällen sind die Telefone schnurlose Telefone. Bei mobilen Terminals wie z.B. GSM-Handys kommt hinzu, daß der Teilnehmer eventuell das Gerät, auf dem er ein Fax empfangen will, häufig ändern muß, um immer auf dem für ihn nächstgelegenen Gerät zu empfangen. Außerdem kommt es vor, daß der Empfänger nur mit großer Zeitverzögerung oder gar nicht erfährt, daß ein Fax für ihn eingetroffen ist.

Es ist bereits bekannt, die am Teilnehmeranschluß eingehenden Nachrichten an einen anderen Zielanschluß umzuleiten. Dieser Zielanschluß ist vom Teilnehmer für eine bestimmte Zeit allerdings dauerhaft, d.h. statisch, vorgegeben.

Demgegenüber ist es die Aufgabe der Erfindung, bei einem Verfahren der eingangs genannten Art eine einheitliche Anschlußnummer des Teilnehmer für alle Telekommunikationsdienste zu erreichen sowie ein entsprechendes Computerprodukt und -system bereitzustellen.

Diese Aufgabe wird bei dem eingangs genannten Verfahren dadurch gelöst, daß das Eingehen bzw. Anstehen von an den Teilnehmeranschluß gerichteten Nachrichten dem Teilnehmer an seinem Endgerät (Terminal) bekanntgegeben wird und daß der Teilnehmer entscheidet, ob und zu welchem anderen Zielanschluß diese Nachrichten jeweils weitergeleitet werden sollen.

Durch die Erfindung wird eine einheitliche Anschlußnummer des Teilnehmers für alle Telekommunikationsdienste möglich, obwohl auf dem unter dieser Anschlußnummer angeschlossenen Endgerät unter Umständen nicht alle Dienste empfangen bzw. abgewickelt werden können. Bei Eintreffen z.B. eines von seinem Endgerät nicht abwickelbaren Anrufes wird der Teilnehmer nach der Nummer eines anderen Zielanschlusses gefragt. Der Zielanschluß kann, was insbesondere für mobile Endgeräte wichtig ist, für jede Nachricht neu definiert werden.

Das erfindungsgemäße Verfahren ermöglicht eine hohe Flexibilität bei der Weiterleitung, d.h., der Teilnehmer kann den Zielanschluß bzw. -gerät bei jedem Anruf neu definieren. Ein weiterer Vorteil besteht in der leichten Realisierbarkeit durch Implementierung geeigneter Software am Teilnehmeranschluß und in der leichten Nachrüstbarkeit bestehender Systeme. Weiterhin ist der Teilnehmer jederzeit über alle für ihn eingehenden Dienste informiert. Das erfindungsgemäße Verfahren kann als Dienst in die Standardisierung für zukünftige bzw. als Erweiterung in bestehende Systeme implementiert werden.

Vorzugsweise wählt der Teilnehmer über sein Endgerät den Zielanschluß, an den die an seinem Teilnehmeranschluß eingegangenen bzw. anstehenden Nachrichten weitergeleitet werden sollen, jedesmal neu aus. Bei mobilen Endgeräten, wie z.B. GSM-Handys, kann der Teilnehmer anstehende Nachrichten jeweils auf dem für ihn nächstgelegenen Zielanschluß empfangen.

Weiterhin können die am Teilnehmeranschluß eingegangenen bzw. anstehenden Nachrichten nach einer Wartezeit automatisch an einen dafür vorbestimmten Zielanschluß weitergeleitet werden. Erfolgt die Angabe des individuellen Zielanschlusses durch den Teilnehmer nicht innerhalb einer bestimmten, vom Teilnehmer frei-wählbaren Zeitspanne, so wird die anstehende Nachricht an den vorbestimmten Zielanschluß weitergeleitet. Bei einer gewählten Zeitspanne von Null, werden die am Teilnehmeranschluß anstehenden Nachrichten sofort an den vorbestimmten Zielanschluß weitergeleitet, ohne daß dem Teilnehmer das Anstehen der Nachrichten signalisiert und dafür ein Zielanschluß abgefragt wird.

In einer vorteilhaften Variante wird dem Teilnehmer an seinem Endgerät auch das erfolgte oder erfolgreiche Weiterleiten von Nachrichten an den Zielanschluß bekanntgegeben. So kann der Teilnehmer nach erfolgtem Ausdruck einer weitergeleiteten Nachricht die Information erhalten, daß die Nachricht ausgedruckt für ihn am Zielanschluß bereitliegt.

Je nach Art der eingegangenen bzw. anstehenden Nachricht kann diese an unterschiedliche vorbestimmte Zielanschlüsse weitergeleitet werden, die jeweils zur Abwicklung der jeweiligen Nachricht ausgebildet sind.

Insbesondere wenn dem Teilnehmer zusammen mit einer anstehenden Nachricht auch z.B. Name und Rufnummer des Absenders sowie Informationen über den Inhalt oder Umfang der Nachricht bekanntgegeben werden, kann der Teilnehmer eine an seinem Teilnehmeranschluß anstehende Nachricht bzw. eingehende Dienste ablehnen.

Von Vorteil ist es auch, wenn am Teilnehmeranschluß eingegangene bzw. anstehende Nachrichten dort bis zu ihrer Weiterleitung zwischengespeichert werden.

Vorzugsweise erfolgt das Weiterleiten der am Teilnehmeranschluß eingegangenen bzw. anstehenden Nachrichten an den Zielanschluß zeitverzögert, um z.B. ein Offenlegen vertraulicher Nachrichten an Dritte zu verhindern, wenn der Zielanschluß öffentlich ist und sich an einem entfernten Ort befindet. Die jeweilige Zeitverzögerung kann vom Teilnehmer nach Bekanntgabe der an seinem Teilnehmeranschluß anstehenden Nachricht jeweils neu gewählt werden, so daß der Teilnehmer z.B. seine zum jeweiligen Zielanschluß zurückzulegende Wegstrecke berücksichtigen kann.

Die Erfindung betrifft in einem weiteren Aspekt auch ein Computerprodukt oder -system mit Computerprogramm-Codemitteln, die geeignet sind, alle Schritte des oben genannten Verfahrens durchzuführen. Das Computerprodukt bzw. -system kann beispielsweise ein Computerprogramm oder ein computerlesbares Speichermedium sein.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigt:
- Fig. 1: schematisch eine Nebenstellenanlage eines Teilnehmers in einem Telekommunikationsnetz; und
- Fig. 2: ein Ablaufdiagramm eines in der Nebenstellenanlage ablaufenden Programms, um eine an ein Endgerät des Teilnehmers gerichtete Nachricht dynamisch an einen anderen Zielanschluß bzw. Zielgerät weiterzuleiten.

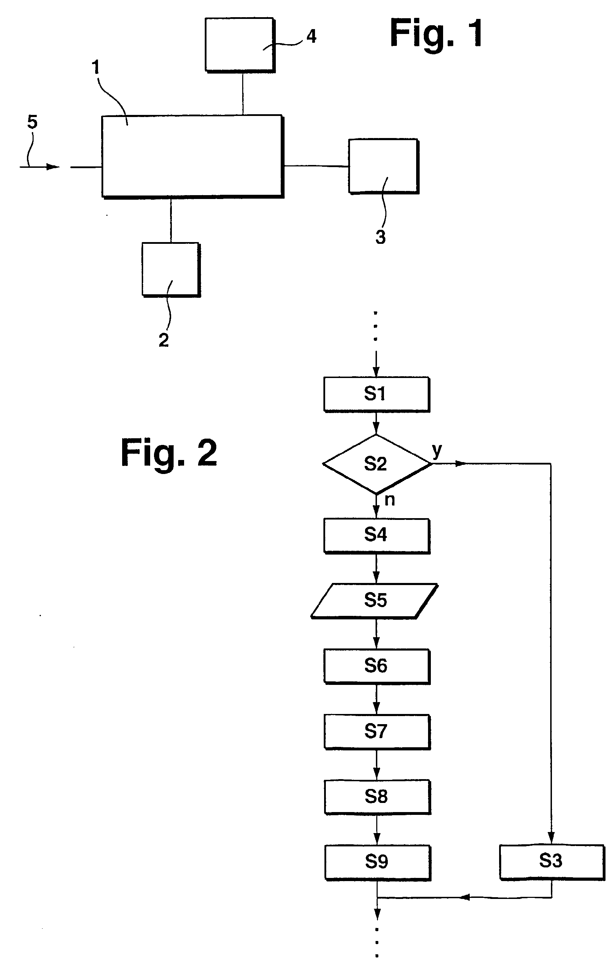

In **Fig. 1** ist mit **1** eine Nebenstellenanlage (PABX) oder ein Basis-Stationsnetz eines Telekommunikationsnetzes bezeichnet. An diese Nebenstellenanlage 1 sind ein Endgerät **2** eines Teilnehmers, ein erstes Fax-Gerät **3** und ein zweites Fax-Gerät **4** angeschlossen. Über das Endgerät 2, bei dem es sich um ein mobiles Terminal wie z.B. ein GSM-Handy handeln kann, können bestimmte Anrufe, wie z.B. ein Fax-Anruf, nicht abgewickelt werden.

Sofern ein solcher Fax-Anruf **5** am Teilnehmeranschluß eingeht, wird dieser Anruf als Dienst erkannt, der nicht über das Endgerät 2 abgewickelt werden kann oder soll. Der Fax-Anruf 5 wird nicht automatisch weitergeleitet, sondern es erfolgt eine Anfrage an das Endgerät 2 nach dem Zielgerät für diesen Fax-Anruf 5. Dabei kann die Nutzinformation im Anruf, d.h. im vorliegenden Fall die Fax-Information, in der Nebenstellenanlage 1 zwischengespeichert werden. Der Teilnehmer wird über sein Endgerät 2 von dem anstehenden Fax-Anruf 5 informiert, wobei diese Information Name und Rufnummer des Absenders sowie Informationen über den Inhalt wie z.B. Anzahl der Seiten des Fax enthalten kann. Der Teilnehmer gibt über sein Endgerät 2 die Rufnummer des von ihm für eine Rufweiterleitung ausgewählten ersten Fax-Geräts 3 an, an dem der Fax-Anruf 5 ausgedruckt wird. Dieser Ausdruck kann auch verzögert erfolgen, um z.B. das Offenlegen vertraulicher Information an Dritte zu verhindern, wenn das Fax-Gerät 3 in einem anderen Raum steht. Optional kann der Teilnehmer nach erfolgtem Ausdruck auf seinem Endgerät 2 eine weitere Nachricht erhalten, daß sein Fax nun ausgedruckt am ersten Fax-Gerät 3 für ihn bereitliegt. Alternativ kann der Teilnehmer den Fax-Anruf 5 auch ablehnen.

Sofern die Angabe eines Zielgeräts nicht innerhalb einer bestimmten, vom Teilnehmer frei-wählbaren Zeitspanne erfolgt, wird der Fax-Anruf 5 an ein vorbestimmtes Zielgerät (Default-Zielgerät), z.B. das zweite Fax-Gerät 4, weitergeleitet und die Nachricht über den eingetroffene Fax-Anruf im Endgerät 2 gespeichert. Falls der Teilnehmer nicht gestört werden möchte, kann er die Zeitspanne auch auf Null setzen, d.h., er erhält nur noch die Information, daß ein Fax-Anruf 5 eingetroffen ist. Optional kann er auch diese Nachricht unterdrücken.

In **Fig. 2** ist beispielhaft ein Ablaufdiagramm (Programm) gezeigt, das in einer Nebenstellenanlage bei der beschriebenen dynamischen Weiterleitung von Anrufen abläuft.

Sofern am Teilnehmeranschluß ein Anruf eingeht (Schritt **S1**), wird in Schritt **S2** geprüft, ob dieser Anruf in dem Endgerät 2 des Teilnehmers überhaupt abgewickelt werden kann. Wenn ja, verzweigt das Programm zu Schritt **S3**, in dem der Anruf über das Endgerät 2 abgewickelt, z.B. im Falle eines Fax-Anrufes ausgedruckt wird. Wenn der Anruf über das Endgerät 2 nicht abgewickelt werden kann, wird das Programm mit Schritt **S4** fortgesetzt, in dem dem Teilnehmer an seinem Endgerät 2 angezeigt wird, daß ein Anruf für ihn ansteht. Daraufhin gibt der Teilnehmer in Schritt **S5** über sein Endgerät 2 den Zielanschluß an, an den die an seinem Teilnehmeranschluß eingegangenen bzw. anstehenden Nachrichten weitergeleitet werden sollen. In Schritt **S6** wird eine vom Teilnehmer vorgegebene Zeitspanne abgewartet, bis der Anruf an den gewünschten Zielanschluß weitergeleitet wird (Schritt **S7**). Dort wird der Anruf dann in Schritt **S8** abgewickelt. Im letzten Schritt **S9** wird dem Teilnehmer an seinem Endgerät 2 angezeigt, daß der Anruf am Zielanschluß erfolgreich abgewickelt wurde, d.h., im Falle eines Fax-Anrufs das Fax nun ausgedruckt am Zielanschluß für ihn bereitliegt.

Bei einem Verfahren zum Weiterleiten von Nachrichten, die an den Anschluß eines Teilnehmers in einem Telekommunikationssystem gerichtet sind, an einen anderen Zielanschluß wird das Eingehen bzw. Anstehen von an den Teilnehmeranschluß gerichteten Nachrichten dem Teilnehmer an seinem Endgerät bekanntgegeben, und der Teilnehmer entscheidet, ob und zu welchem anderen Zielanschluß diese Nachrichten jeweils weitergeleitet werden sollen. Dadurch wird eine einheitliche Anschlußnummer des Teilnehmers für alle Telekommunikationsdienste möglich, obwohl auf dem unter dieser Anschlußnummer angeschlossenen Endgerät unter Umständen nicht alle Dienste empfangen werden können.

## Patentansprüche

1. Verfahren zum Weiterleiten von Nachrichten (5), die an den Anschluß eines Teilnehmers in einem Telekommunikationssystem gerichtet sind, an einen anderen Zielanschluß (3, 4),
dadurch gekennzeichnet,
daß das Eingehen bzw. Anstehen von an den Teilnehmeranschluß gerichteten Nachrichten (5) dem Teilnehmer an seinem Endgerät (2) bekanntgegeben wird und daß der Teilnehmer entscheidet, ob und zu welchem anderen Zielanschluß (3, 4) diese Nachrichten (5) jeweils weitergeleitet werden sollen.

2. Verfahren nach Anspruch 1, dadurch gekennzeichnet, daß der Teilnehmer über sein Endgerät (2) den Zielanschluß (3, 4), an den die an seinem Teilnehmeranschluß eingegangenen bzw. anstehenden Nachrichten (5) weitergeleitet werden sollen, jeweils auswählt.

3. Verfahren nach Anspruch 1 oder 2, dadurch gekennzeichnet, daß die am Teilnehmeranschluß eingegangenen bzw. anstehenden Nachrichten (5) nach einer Wartezeit automatisch an einen dafür vorbestimmten Zielanschluß (4) weitergeleitet werden.

4. Verfahren nach einem der vorhergehenden Ansprüche, dadurch gekennzeichnet, daß dem Teilnehmer an seinem Endgerät (2) das Weiterleiten von Nachrichten (5) an den Zielanschluß (3, 4) bekanntgegeben wird.

5. Verfahren nach Anspruch 3 oder 4, dadurch gekennzeichnet, daß je nach Art der eingegangenen bzw. anstehenden Nachricht (5) diese Nachricht (5) an unterschiedliche vorbestimmte Zielanschlüsse (3, 4) weitergeleitet wird.

6. Verfahren nach einem der vorhergehenden Ansprüche, dadurch gekennzeichnet, daß der Teilnehmer eine an seinem Teilnehmeranschluß eingegangene bzw. anstehende Nachricht (5) ablehnen kann.

7. Verfahren nach einem der vorhergehenden Ansprüche, dadurch gekennzeichnet, daß am Teilnehmeranschluß eingegangene bzw. anstehende Nachrichten (5) bis zu ihrer Weiterleitung zwischengespeichert werden.

8. Verfahren nach einem der vorhergehenden Ansprüche, dadurch gekennzeichnet, daß das Weiterleiten der am Teilnehmeranschluß eingegangenen bzw. anstehenden Nachrichten (5) an den Zielanschluß (3, 4) zeitverzögert erfolgt.

9. Verfahren nach Anspruch 8, dadurch gekennzeichnet, daß die Zeitverzögerung vom Teilnehmer nach Bekanntgabe einer an seinem Teilnehmeranschluß anstehenden Nachricht (5) gewählt wird.

10. Computerprodukt oder -system mit Computerprogramm-Codemitteln, die geeignet sind, alle Schritte des Verfahrens nach einem der Ansprüche 1 bis 9 durchzuführen.

11. Computerprodukt oder -system nach Anspruch 10, dadurch gekennzeichnet, daß das Computerprodukt bzw. -system ein Computerprogramm ist.

12. Computerprodukt oder -system nach Anspruch 10, dadurch gekennzeichnet, daß das Computerprodukt bzw. -system ein computerlesbares Speichermedium ist.
